# DEMANDE DE BREVET EUROPEEN

(11) **EP 1 132 355 A1**
(43) Date de publication de la demande: **12.09.2001**
(21) Numéro de dépôt: 01440054.3
(22) Date de dépôt: 05.03.2001
(51) Int. Cl.: C04B 28/06, C04B 14/20, B28B 19/00

(54) **Matériau de construction à haut pouvoir d'isolation thermique et panneau de construction obtenu avec ledit materiau**

(30) Priorité: 06.03.2000 FR 0002840
(71) Demandeur: Groupe HDT Sarl, 25400 Audincourt (FR)
(72) Inventeur: Hugard, Roger, 90800 Bavilliers (FR)
(74) Mandataire: Nithardt, Roland

(57) **Abrégé**

La présente invention concerne un matériau de construction ainsi qu'un panneau de construction à haut pouvoir d'isolation thermique, présentant une excellente résistance mécanique et permettant une construction simple, économique, fiable et rigide d'une cheminée d'intérieur par exemple.

Ce matériau de construction comprend au moins des granulats assemblés par un liant et est caractérisé en ce qu'il comporte en plus un agrégat minéral en grain à base de mica, comme la vermiculite ou ses dérivés.

Application : Bâtiment en général et plus particulièrement cheminée d'intérieur.

## Description

La présente invention concerne un matériau de construction à haut pouvoir d'isolation thermique ainsi qu'un panneau de construction obtenu avec ledit matériau, ce matériau comportant au moins des granulats assemblés par un liant.

Ce matériau de construction, appelé communément béton, est utilisé dans la majorité des ouvrages et des constructions de toutes catégories. Selon les dosages des matières de base composant le béton et, dans certains cas, des matières additives, on obtient des bétons présentant des caractéristiques physiques et mécaniques différentes, destinés à être utilisés dans des domaines techniques variés.

Dans certaines applications, comme par exemple dans la fabrication de cheminées intérieures, on cherche un matériau de construction à la fois suffisamment résistant mécaniquement pour être autoportant et présentant un haut pouvoir d'isolation thermique pour limiter la conduction de la chaleur du foyer vers la décoration extérieure afin d'éviter tout risque d'incendie.

Les bétons traditionnels ne résistent pas aux fortes températures et se fissurent au-delà de 300°C. Les bétons dits isolants thermiques et contenant par exemple des billes d'argile supportent les fortes températures mais leur résistance mécanique est insuffisante pour assurer une fonction autoportante. De même, les publications US-A-2 469 081 et FR-A-1 097 119 décrivent des bétons réfractaires et résistants au feu, obtenus par un mélange de ciment de mica et éventuellement d'autres composants tels que par exemple du chlorure de magnésium. Ces bétons ne comportent pas de sable, n'ont donc pas de consistance propre et ne sont pas autoportants. De plus, ils sont sophistiqués et donc coûteux à fabriquer et ne peuvent être utilisés qu'en revêtement de surface ou pris en sandwich entre deux cloisons leur servant de support.

D'autres bétons comportant des additifs peuvent être résistants à la compression, à la chaleur, aux flammes et être de bons isolants sonores. Néanmoins, les additifs incorporés dans ces bétons les rendent denses et compacts. Par conséquent, ces bétons ne contiennent pas d'air et ne peuvent pas avoir des propriétés d'isolation thermique. De plus, les additifs utilisés dans leur fabrication renchérissent leur coût de fabrication. C'est le cas par exemple du béton décrit dans la publication CH-A- 359 650. Ce béton comporte un mélange de sable, de ciment, d'eau et de particules de vermiculite traitées thermiquement par un procédé de vitrification durcissant leur surface et les rendant plus adhérentes au ciment. Ce béton est vibré et utilisé avec des armatures en aciers spéciaux permettant d'obtenir un béton très résistant mécaniquement, homogène, très compact. Ce béton, ne contenant pas d'air, il et ne présente aucune propriété d'isolation thermique.

Il est connu que les techniques actuelles dans ce domaine particulier des cheminées d'intérieur utilisent en habillage intérieur la laine de roche comme isolant thermique. Néanmoins, cette technique nécessite la construction d'une structure métallique autoportante au moyen de profilés et d'organes de liaison, la laine de roche n'ayant aucune résistance mécanique. Cette technique n'offre pas un résultat optimal en terme d'isolation au niveau de la poutre et de la hotte,puisque l'étanchéité thermique que procure la laine de roche n'est pas suffisante. Il s'agit donc d'une technique complexe à mettre en oeuvre, onéreuse en matériaux et en temps de montage, sans pour autant garantir une isolation thermique suffisante.

Le but de la présente invention est de pallier ces inconvénients en proposant un matériau de construction ainsi qu'un panneau de construction à haut pouvoir d'isolation thermique tout en présentant une excellente résistance mécanique et permettant une construction simple, économique, fiable et rigide de la cheminée.

Ce but est atteint par un matériau de construction tel que défini en préambule et caractérisé en ce que le liant est constitué de ciment fondu, en ce que les granulats comportent du sable, en ce que ledit matériau comporte en plus de la vermiculite et en ce que ces composants sont agencés pour conférer une résistance mécanique suffisante au matériau de manière qu'il soit autoportant.

Selon une caractéristique particulièrement avantageuse, les composants sont agencés pour conférer au matériau un coefficient de conduction thermique tel qu'il diminue dans le temps quand le matériau est soumis à une température donnée, quelle que soit sa durée d'exposition.

La vermiculite peut avantageusement se présenter sous forme de paillettes.

Ce matériau peut être composé pour un volume de granulats d'au moins un volume de vermiculite et d'au plus quatre volumes de vermiculite.

De préférence, le ciment fondu comprend de l'alumine et le sable est non calcaire.

Ce but est également atteint par un panneau de construction à haut pouvoir d'isolation thermique, caractérisé en ce qu'il est formé à partir du matériau de construction tel que défini ci-dessus.

Dans une forme préférée de l'invention, le panneau de construction est recouvert sur l'une de ses faces d'une feuille d'isolation et de protection thermique réfléchissant la chaleur.

Cette feuille d'isolation et de protection thermique est rendue solidaire dudit panneau, par exemple, au moment de sa fabrication par coulage directe du matériau de construction sur ladite feuille.

Comme tout panneau de construction, il peut selon le cas comporter une armature métallique intérieure.

La présente invention est décrite à présent sur la base d'un exemple de réalisation tel qu'il peut être utilisé dans la fabrication des cheminées d'intérieur.

Dans l'application qui nous intéresse tout particulièrement, à savoir la construction de cheminées d'intérieur, le matériau de construction selon l'invention est un matériau complexe qui comporte
- du sable ou tout autre agrégat équivalent,
- du ciment ou tout autre liant équivalent,
- un matériau minéral en grain tel que des paillettes micacées expansées connues sous le nom de vermiculite ou tout autre dérivé, et
- en fonction de la nature du liant, un complément de liquide tel que de l'eau.

Le sable peut être du sable de rivière ou du sable de concassé non calcaire.

Le ciment peut être un ciment appelé ciment fondu comportant au moins 40% d'alumine dont la caractéristique principale est sa prise rapide, entre 6 et 8 heures à une température ambiante d'environ 23° par rapport à plus de 12 heures pour un ciment normal. Cette caractéristique permet de fabriquer tous les jours des nouveaux panneaux de construction avec les mêmes moules. Néanmoins, tout autre ciment peut être utilisé.

La vermiculite est un minéral à base de silicate, fréquent dans les sols des régions tempérées et provenant de la transformation des micas au cours de la formation du sol. La vermiculite est connue pour ne pas se désagréger sous l'effet de la chaleur et est employée comme isolant thermique. Elle se présente généralement sous la forme de paillettes, est vendue en sac et est utilisée directement ou mélangée avec de l'asphalte pour la réalisation de chapes d'isolation.

Dans la présente invention, la vermiculite, qui se présente en petites particules légères et expansées, se mélange parfaitement au sable pour obtenir un mélange homogène. De plus, elle est ininflammable et résiste à plus de 1000°C. Ces particules de vermiculite présentent l'avantage d'emprisonner des molécules d'air dans le béton qui lui confèrent ainsi des propriétés d'isolation thermique excellentes.

Le matériau de construction, selon l'invention, est obtenu en mélangeant les composés ci-dessus dans les proportions suivantes données à titre d'exemple :
- Vermiculite 2 volumes
- Sable de granulométrie entre 0.04 et 0.07 1 volume
- Ciment fondu 0,75 volume

Le dosage des différents composés est fonction du résultat thermique et du résultat mécanique souhaités. Si l'on souhaite augmenter le pouvoir d'isolation thermique de ce matériau de construction alors on augmentera le pourcentage de vermiculite, sans toutefois dépasser un certain pourcentage qui rendrait le matériau de construction moins performant mécaniquement.

Dans tous les cas, on détermine que, pour un volume de sable, il faut au moins un volume et au plus quatre volumes de vermiculite.

Le panneau de construction, selon l'invention, est réalisé à partir du matériau de construction tel que défini ci-dessus et obtenu par moulage simple et sans vibration dans un coffrage ou un moule adéquat. Le panneau ainsi obtenu est un produit très homogène, stable, résistant à la chaleur et thermiquement isolant. Il peut être travaillé comme par exemple les briques ou les agglos et permet la réalisation des raccords et des joints pour obtenir une paroi ou une structure autoportante.

L'épaisseur dudit panneau est fonction du degré d'isolation thermique recherché tout en respectant un encombrement prédéfini par exemple pour tenir compte des contraintes dimensionnelles de la cheminée.

Ce panneau de construction peut être un panneau monolithique donc uniquement composé dudit matériau. Il peut aussi être renforcé par une armature métallique intérieure réalisée par exemple en fil de fer recuit de quelques millimètres de diamètre.

Il peut aussi se présenter sous la forme d'un panneau complexe ou multicouche, par exemple en l'associant à une feuille d'isolation telle que le produit Aluboard® ou tout autre produit isolant. Les épaisseurs du panneau et de la feuille sont choisies en fonction de l'isolation thermique et de la résistance mécanique recherchées.

La liaison entre le panneau de construction et la feuille d'isolation thermique peut être obtenue par coulage du matériau de construction directement sur la feuille d'isolation thermique disposée au fond du moule ou par collage de la feuille d'isolation thermique sur le panneau après séchage.

Dans le cas de l'utilisation du panneau complexe tel que défini ci-dessus, la feuille d'isolation thermique est de préférence disposée à l'extérieur du panneau et peut recevoir la décoration extérieure. Elle a l'avantage de créer un écran thermique augmentant le pouvoir d'isolation thermique du panneau par rapport à la chambre de chauffe de la cheminée. Ce panneau de construction disposé à l'intérieur de la cheminée offre un grand volume d'inertie de part son pouvoir d'isolation thermique élevé.

Les essais thermiques ont permis de constater que la courbe de montée en température du matériau de construction, selon l'invention, ne suit pas une fonction linéaire mais plutôt une courbe asymptotique, qui démontre qu'à partir d'une certaine température, la température de ce matériau se stabilise quelle que soit la durée d'exposition. Il en résulte que la conductibilité thermique de ce matériau diminue avec la température en fonction du temps. Cette caractéristique tout à fait inattendue est extrêmement intéressante dans le cas des feux de cheminée où la température à l'intérieur du conduit peut atteindre les 1000°C.

En fonctionnement normal, les essais thermiques ont démontré que la température extérieure à la chambre de chauffe ne dépasse pas les 30 à 45°C alors que la température intérieure se situe entre 150 et 200°.

La présente invention n'est pas limitée à l'exemple de réalisation décrit mais s'étend à toute modification et variante évidentes pour un homme du métier. Notamment, les matières utilisées et les dosages indiqués sont donnés à titre indicatif et peuvent varier en fonction des propriétés mécaniques et thermiques que l'on souhaite obtenir en relation avec une application bien précise, l'essentiel étant la présence de la vermiculite ou de ses dérivés dans le présent matériau qui permet d'assurer une excellente isolation thermique.

## Revendications

1. Matériau complexe de construction à haut pouvoir d'isolation thermique comprenant au moins des granulats assemblés par un liant, **caractérisé en ce que** le liant est constitué de ciment fondu, en ce que les granulats comportent du sable, en ce que ledit matériau comporte en plus de la vermiculite et en ce que ces composants sont agencés pour conférer une résistance mécanique suffisante audit matériau de manière qu'il soit autoportant.

2. Matériau selon la revendication 1, **caractérisé en ce que** lesdits composants sont agencés pour conférer audit matériau un coefficient de conduction thermique tel qu'il diminue dans le temps quand ledit matériau est soumis à une température donnée, quelle que soit sa durée d'exposition.

3. Matériau selon la revendication 1, **caractérisé en ce que** la vermiculite se présente sous la forme de paillettes.

4. Matériau selon l'une au moins des revendications 1 à 3, **caractérisé en ce qu**'il est composé pour un volume de granulats d'au moins un volume de vermiculite et d'au plus quatre volumes de vermiculite.

5. Matériau selon la revendication 1, **caractérisé en ce que** ledit ciment fondu comprend de l'alumine.

6. Matériau selon la revendication 1, **caractérisé en ce que** ledit sable ne comprend pas de calcaire.

7. Panneau de construction à haut pouvoir isolant, **caractérisé en ce qu**'il est formé à partir dudit matériau de construction selon l'une quelconque des revendications précédentes.

8. Panneau de construction selon la revendication 7, **caractérisé en ce qu**'il est recouvert sur l'une de ses faces d'une feuille d'isolation et de protection thermique réfléchissant la chaleur.

9. Panneau de construction selon la revendication 8, **caractérisé en ce que** ladite feuille d'isolation et de protection thermique est rendue solidaire dudit panneau au moment de sa fabrication par coulage directe dudit matériau de construction sur ladite feuille.

10. Panneau de construction selon l'une quelconque des revendications 7 à 9, **caractérisé en ce qu**'il comporte une armature métallique intérieure.
